# EUROPÄISCHE PATENTSCHRIFT

(11) **EP 0 368 220 B1**
(45) Veröffentlichungstag und Bekanntmachung des Hinweises auf die Patenterteilung: **20.04.1994**
(21) Anmeldenummer: 89120543.7
(22) Anmeldetag: 07.11.1989
(51) Int. Cl.: H04N 5/445, H04N 5/76

(54) **Anordnung zum Überspielen eines Videosignals von einem ersten zu einem zweiten videosignalverarbeitenden Gerät**
Device for copying a video signal from a first video apparatus to a second one
Dispositif de copie d'un signal vidéo à partir d'un premier appareil video vers un second appareil video

(30) Priorität: 11.11.1988 DE 3838203
(43) Veröffentlichungstag der Anmeldung: 16.05.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Rosenberger, Winfried, Dipl.-Ing. Grundig E.M.V., D-8510 Fürth/Bay (DE)
(74) Vertreter: Eichstädt, Alfred

(56) Entgegenhaltungen:
- GB-A- 2 193 608
- FUNKSCHAU, Band 59, Nr. 4, 13. Februar 1987, Seiten 55-57, München, DE;Erfahrungsbericht Digivision 3896: "Das Bild im Bild"

## Beschreibung

Die Erfindung betrifft eine Anordnung zum Überspielen eines Videosignals von einem ersten zu einem zweiten videosignalverarbeitenden Gerät mit den im Oberbegriff des Anspruchs 1 angegebenen Merkmalen.

Aus der Zeitschrift "Funkschau", Heft 4/1987, S. 55-57, ist ein Fernsehempfänger bekannt, dessen Anschlußbuchseneinheit drei Scart-Buchsen für den Anschluß von videosignalverarbeitenden Geräten aufweist. Wird bei diesem bekannten Fernsehempfänger an die Anschlußbuchsen AV2 und AV3 jeweils ein Videorecorder angeschlossen, so kann über die Anschlußbuchseneinheit des Fernsehempfängers ein Überspielvorgang erfolgen, beispielsweise von dem an die Anschlußbuchse AV2 angeschlossenen auf den an AV3 angeschlossenen Videorecorder. Dabei kann während des Überspielvorgangs ein beliebiges Fernsehprogramm betrachtet und gleichzeitig der Überspielvorgang anhand eines Kleinbildes auf dem Bildschirm kontrolliert werden. Wird bei dieser Anordnung während des Überspielvorganges mittels der Fernbedienung versehentlich entweder die Anschlußbuchse AV1 oder AV3 angewählt und damit als Videosignaleingang definiert, so wird der laufende Uberspielvorgang gestört.

Der Erfindung liegt die Aufgabe zugrunde, eine Anordnung der im Oberbegriff des Anspruchs 1 angegebenen Art derart weiterzubilden, daß dann, wenn während des Überspielvorganges eine nicht für den Überspielvorgang als Videosignaleingang angewählte Anschlußbuchse angewählt wird, eine Störung des Überspielvorganges vermieden wird.

Diese Aufgabe wird bei einer Anordnung der im Oberbegriff des Anspruchs 1 angegebenen Art durch die im kennzeichnenden Teil des Anspruchs 1 angegebenen Merkmale gelöst. Vorteilhafte Weiterbildungen ergeben sich aus den abhängigen Ansprüchen.

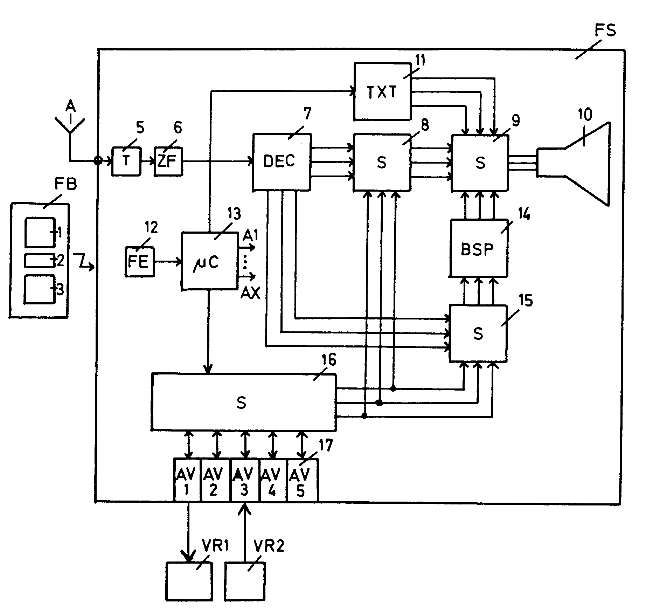

Die Vorteile der Erfindung bestehen insbesondere darin, daß ein über die Anschlußbuchseneinheit des Fernsehempfängers laufender Überspielvorgang auch bei einer versehentlichen Tastenfehlbetätigung auf dem Fernbedienungsgeber nicht gestört wird. Bei einer vorteilhaften Weiterbildung der Erfindung wird der Benutzer durch die Anzeige eines Warnsignals auf dem Bildschirm des Fernsehempfängers auf die Tastenfehlbetätigung aufmerksam gemacht. Weitere vorteilhafte Eigenschaften der Erfindung ergeben sich aus der Erläuterung eines Ausführungsbeispiels anhand der Figur.

Die Figur zeigt einen an eine Antenne A oder eine Kabelübertragungsstrecke angeschlossenen Fernsehempfänger FS mit einem Fernbedienungsgeber FB sowie zwei an den Fernsehempfänger angeschlossene Videorecorder VR1 und VR2.

Der Fernsehempfänger FS weist einen mit der Antenne A verbundenen Tuner 5, einen ZF-Verstärker 6, einen Farbdecoder 7, einen ersten Schalter 8, einen zweiten Schalter 9, einen Bildschirm 10, einen Textbaustein 11, einen Fernbedienungsempfänger 12, einen Mikrocomputer 13, einen Bildspeicher 14, einen dritten Schalter 15, einen vierten Schalter 16, in welchem im Bedarfsfall auch eine Farbcodierung, eine Farbdecodierung oder eine Entschlüsselung erfolgen kann, und eine Anschlußbuchseneinheit 17 auf. Die Anschlußbuchseneinheit 17 enthält im gezeigten Ausführungsbeispiel die Scart-Buchsen AV1, AV2 und AV3, Cinch-Buchsen AV4, an die beispielsweise ein Kamerarecorder angeschlossen werden kann, und eine Anschlußbuchse AV5, beispielsweise zum Anschluß eines S-VHS-Gerätes.

Der Videorecorder VR1 ist an die Scart-Buchse AV1 angeschlossen und hat beim Überspielvorgang die Funktion des aufnehmenden Videorecorders. Der Videorecorder VR2 ist an die Scart-Buchse AV3 angeschlossen und hat beim Überspielvorgang die Funktion des wiedergegebenen Videorecorders.

Der Fernbedienungsgeber FB enthält eine Zifferntastatur 1, einen Tastenblock 2 zur Anwahl einer der Anschlußbuchsen AV1...AV5 als Videosignaleingang und einen Block 3 mit Funktionstasten.

Im folgenden wird ein Beispiel für den Ablauf eines Überspielvorganges beschrieben:
Zunächst wird mittels des Fernbedienungsgebers FB die Scart-Buchse AV3 als Videosignaleingang angewählt. Hierzu kann der Tastenblock 2 entweder aus einer einzigen AV-Taste bestehen, wobei die Scart-Buchse AV3 durch dreimalige Betätigung dieser einzigen AV-Taste angewählt wird, oder aus fünf AV-Tasten bestehen, wobei die Scart-Buchse AV3 mittels einer dieser Tasten direkt angewählt wird.

Das auf die vorstehend beschriebene Weise eingegebene Signal wird über den Fernbedienungsempfänger 12 dem Mikrocomputer 13 zugeführt. Dieser speichert in einem nicht gezeichneten Speicher ein Kennsignal dafür ab, daß die Scart-Buchse AV3 als Videosignaleingang ausgewählt wurde.

Anschließend wird der an die Scart-Buchse AV3 angeschlossene Videorecorder VR2 auf Wiedergabe und der an die Scart-Buchse AV1 angeschlossene Videorecorder VR1 auf Aufnahme geschaltet.

Dann wird mittels einer oder mehrerer Tasten des Fernbedienungsgebers FB - beispielsweise durch gemeinsame Betätigung der einzigen AV-Taste 2 und einer Taste AUX des Funktionstastenblockes 3 - der Überspielvorgang eingeleitet. Hierzu schaltet der Mikrocomputer 13 in Ansprache auf die vorgenannte Tastenbestätigung den Schalter 16 im Sinne einer Verbindung von wiedergebendem und aufnehmendem Videorecorder durch.

Bei einer bevorzugten Weiterbildung der Erfindung verbindet der Mikrocomputer 13 den wiedergebenden Videorecorder VR 2 nicht nur mit dem an die Anschlußbuchse AV1 angeschlossenen aufnehmenden Videorecorder VR 1, sondern auch automatisch mit den Anschlußbuchsen AV2, AV4 und AV5, so daß ein gleichzeitiges Überspielen auf mehrere Aufnahmegeräte erfolgen kann.

Liegt am Ausgang des wiedergebenden Videorecorders VR2 dieselbe Signalart vor wie am Eingang des aufzeichnenden Videorecorders VR1 (beispielsweise ein FBAS-Signal), dann hat der Schalter 16 eine reine Schaltfunktion.

Liegt hingegen am Ausgang des wiedergebenden Gerätes eine andere Signalart vor wie am Eingang des aufzeichnenden Gerätes, dann wird das wiedergegebene Signal im Schalter 16 weiterhin einer Umcodierung unterworfen. Beispielsweise werden die von einem an die Anschlußbuchse AV5 angeschlossenen S-VHS-Videorecorder, welcher für Luminanz und Chrominanz Signale auf getrennten Leitungen zur Verfügung stellt, gelieferten Signale im Schalter 16 in ein FBAS-Signal umcodiert. Ferner kann das von der Videosignalquelle angelieferte Signal auch verschlüsselt sein. In diesem Fall findet im Schaltungsblock 16 auch eine Signalentschlüsselung statt.

Neben der Durchschaltung des Schalters 16 aktiviert der Mikrocomputer 13 ferner die Anzeige eines alphanumerischen Kennsignals für den Überspielvorgang auf dem Bildschirm 10, beispielsweise des Schriftzuges "COPY". Dazu adressiert der Mikrocomputer 13 einen ROM-Speicher des Textbausteins 11 derart, daß die dem Schriftzug "COPY" entsprechenden Signale aus dem ROM ausgelesen und als RGB-Signale im Schalter 9 in das auf dem Bildschirm 10 darzustellende Bild eingeblendet werden.

Ist der Überspielvorgang auf die vorstehend beschriebene Weise eingeleitet, so kann der Fernsehempfänger FS zum Empfang eines beliebigen Programmes umgeschaltet werden oder auch in den Bereitschaftsbetrieb gebracht werden. Bei einer Umschaltung auf ein beliebiges Fernsehprogramm werden die zugehörigen Videosignale über den Tuner 5, den ZF-Verstärker 6, den Farbdecoder 7, den ersten Schalter 8 und den zweiten Schalter 9 auf dem Bildschirm 10 dargestellt, wobei der in dieses Bild eingeblendete Schriftzug "COPY" an den über die Anschlußbuchseneinheit 17 laufenden Überspielvorgang erinnert.

Weiterhin kann das Signal des wiedergebenden Recorders VR2 zusätzlich über den Schalter 15 und den Bildspeicher 14 in ein Kleinbild umgesetzt werden und dieses Kleinbild im Schalter 9 in das gewählte Programm eingeblendet werden.

Ebenso ist es möglich, das Signal vom wiedergebenden Recorder VR 2 als Großbild darzustellen und das gewählte Programm als Kleinbild in das vom Recorder VR2 wiedergegebene Signal einzublenden. Hierzu wird das vom Recorder VR2 wiedergegebene Signal im Schalter 8 als Großbild ausgewählt und das Ausgangssignal des Farbdecoders 7 über den Schalter 15 und den Bildspeicher 14 als Kleinbild eingeblendet.

Der Ablauf sämtlicher Umschaltvorgänge der Schalter 8, 9 und 15, des Tuners 5 und der Einschreib- und Auslesevorgänge des Bildspeichers 14 erfolgen unter Steuerung durch den Mikrocomputer 13, der die dafür notwendigen Steuersignale an seinen Ausgängen A1...AX zur Verfügung stellt.

Wird nun während dieses Überspielvorganges versehentlich eine der Anschlußbuchsen AV1, AV2, AV4 oder AV5 angewählt, so erkennt der Mikrocomputer 13 anhand des abgespeicherten Kennsignals, daß für den bereits laufenden Überspielvorgang die Anschlußbuchse AV3 als Videosignalquelle angewählt ist und daß eine Umschaltung auf eine der Anschlußbuchsen AV1, AV2, AV4 oder AV5 als Videosignalquelle zu einer Störung des laufenden Überspielvorgangs führen würde.

Bei einer ersten Ausführungsform der Erfindung ignoriert der Mikrocomputer 13 eine während des Überspielvorgangs erfolgende Anwahl einer der Anschlußbuchse AV1, AV2, AV4 oder AV5, so daß der über den Schalter 16 laufende Überspielvorgang nicht gestört wird.

Bei einer zweiten Ausführungsform der Erfindung wählt der Mikrocomputer 13 unabhängig davon, welche der Anschlußbuchsen AV1, AV2, AV4 oder AV5 angewählt wurde, immer die Anschlußbuchse AV3 an, die bereits für den laufenden Überspielvorgang als Videosignalquelle angewählt ist.

Bei einer vorteilhaften Weiterbildung der Erfindung aktiviert der Mikrocomputer 13 über den Textbaustein 11 bei einer versehentlichen Anwahl einer der nicht für den Überspielvorgang als Videosignalquelle angewählten Anschlußbuchse die Anzeige eines Warnsignals auf dem Bildschirm 10. Dieses Warnsignal kann beispielsweise darin bestehen, daß die als Kennung für den Überspielvorgang eingeblendete alphanumerische Anzeige des Schriftzuges "COPY" zum Blinken gebracht wird oder darin, daß ein weiterer Schriftzug, beispielsweise der Schriftzug "VORSICHT" neben oder über dem Schriftzug "COPY" angezeigt wird.

## Patentansprüche

1. Anordnung zum Überspielen eines Videosignals von einem ersten zu einem zweiten videosignalverarbeitenden Gerät, mit einem Fernsehempfänger, welcher aufweist:
- eine Anschlußbuchseneinheit (17) mit mindestens zwei Anschlußbuchsen (AV1, AV2, AV3, AV4, AV5) zum Anschluß der videosignalverarbeitenden Geräte,
- eine Bedieneinheit (FB, 12) zur Anwahl einer der Anschlußbuchsen als Videosignaleingang und zur Initiierung des Überspielvorgangs, und
- eine Steuerschaltung (13) zur Durchschaltung eines Schalters (16) im Sinne einer Verbindung von erstem und zweitem videosignalverarbeitenden Gerät,
**dadurch gekennzeichnet**, daß
- die Steuerschaltung in Form eines Mikrocomputers (13) ausgeführt ist, der derart ausgelegt ist, daß er bei einer während des Überspielvorganges erfolgenden Anwahl einer der nicht für den Überspielvorgang als Videosignaleingang angewählten Anschlußbuchsen erkennt, daß bereits eine der Anschlußbuchsen als Videosignaleingang angewählt ist, und die Umschaltung des Videosignaleinganges auf eine andere Anschlußbuchse mittels des Schalters (16) nicht durchführt.

2. Anordnung nach Anspruch 1, **dadurch gekennzeichnet**, daß der Mikrocomputer (13) derart ausgelegt ist, daß er bei einer während des Überspielvorganges erfolgenden Anwahl einer der nicht für den Überspielvorgang als Videosignaleingang angewählte Anschlußbuchsen unabhängig von der angewählten Anschlußbuchse die für den Überspielvorgang angewählte Anschlußbuchse als Videosignaleingang anwählt.

3. Anordnung nach Anspruch 1, **dadurch gekennzeichnet**, daß der Mikrocomputer (13) derart ausgelegt ist, daß er bei einer während des Überspielvorgangs erfolgenden Anwahl einer der nicht für den Überspielvorgang als Videosignaleingang angewählten Anschlußbuchsen die Anwahl ignoriert.

4. Anordnung nach einem oder mehreren der Ansprüche 1 bis 3, **dadurch gekennzeichnet**, daß der Mikrocomputer (13) derart ausgelegt ist, daß er bei einer während des Überspielvorganges erfolgenden Anwahl einer der nicht für den Überspielvorgang als Videosignaleingang angewählten Anschlußbuchsen über einen Textbaustein (11) die Anzeige eines Warnsignals auf dem Bildschirm (10) des Fernsehempfängers (FS) aktiviert.

5. Anordnung nach einem oder mehreren der Ansprüche 1-4, **dadurch gekennzeichnet**, daß das von der für den Überspielvorgang als Videosignaleingang angewählten Anschlußbuchse gelieferte Videosignal auf dem Bildschirm (10) dar stellbar ist.

6. Anordnung nach einem oder mehreren der Ansprüche 1-5, **dadurch gekennzeichnet**, daß der Mikrocomputer (13) derart ausgelegt ist, daß er nach der Initiierung des Überspielvorganges die alphanumerische Anzeige eines Kennsignals für den Überspielvorgang auf dem Bildschirm (10) aktiviert.

## Claims

1. Arrangement for copying a video signal from a first to a second video-signal-processing device, comprising a television receiver which exhibits:
- a terminal socket unit (17) having at least two terminal sockets (AV1, AV2, AV3, AV4, AV5) for connecting the video-signal-processing devices,
- an operating unit (FB, 12) for selecting one of the terminal sockets as video signal input and for initiating the copying process, and
- a control circuit (13) for switching through a switch (16) in the sense of a connection of the first and second video-signal-processing device,
characterized in that
- the control circuit is constructed in the form of a microcomputer (13) which is designed in such a manner that, during selection of one of the terminal sockets not selected as video signal input for the copying process taking place during the copying process, it recognizes that one of the terminal sockets is already selected as video signal input and does not switch the video signal input to another terminal socket by means of the switch (16).

2. Arrangement according to Claim 1, characterized in that the microcomputer (13) is designed in such a manner that, during selection of one of the terminal sockets not selected as video signal input for the copying process taking place during the copying process, it selects as video signal input the terminal socket selected for the copying process independently of the selected terminal socket.

3. Arrangement according to Claim 1, characterized in that the microcomputer (13) is designed in such a manner that, during selection of one of the terminal sockets not selected as video signal input for the copying process taking place during the copying process, it ignores the selection.

4. Arrangement according to one or more of Claims 1 to 3, characterized in that the microcomputer (13) is designed in such a manner that, during selection of one of the terminal sockets not selected as video signal input for the copying process taking place during the copying process, it activates the display of a warning signal on the screen (10) of the television receiver (FS) via a text chip (11)

5. Arrangement according to one or more of Claims 1-4, characterized in that the video signal supplied by the terminal socket selected as video signal input for the copying process can be displayed on the screen (10).

6. Arrangement according to one or more of Claims 1-5, characterized in that the microcomputer (13) is designed in such a manner that, after initiation of the copying process, it activates the alphanumeric display of an identification signal for the copying process on the screen (10).

## Revendications

1. Dispositif pour transférer l'enregistrement d'un signal vidéo d'un premier appareil à un second appareil de traitement du signal vidéo, comportant un récepteur de télévision, qui possède :
- une unité (17) à douilles de raccordement, comportant au moins deux douilles de raccordement (AV1, AV2, AV3, AV4, AV5), pour le raccordement des appareils de traitement du signal vidéo,
- une unité de commande (FB, 12) pour sélectionner l'une les douilles de raccordement en tant qu'entrée du signal vidéo et pour déclencher le processus de transfert d'enregistrement, et
- un circuit de commande (13) pour fermer un commutateur (16) dans le sens d'une liaison entre les premier et second appareils de traitement du signal vidéo,
caractérisé en ce que
- le circuit de commande est réalisé sous la forme d'un micro-ordinateur (13), qui est agencé de manière à identifier, lors d'une sélection exécutée pendant l'opération de transfert d'enregistrement, de l'une des douilles de raccordement non sélectionnées en tant qu'entrée du signal vidéo pour le processus de transfert d'enregistrement, que déjà l'une des douilles de raccordement est sélectionnée en tant qu'entrée pour le signal vidéo, et n'exécute pas la commutation de l'entrée pour le signal vidéo sur une autre douille de raccordement, à l'aide du commutateur (16).

2. Dispositif selon la revendication 1, caractérisé en ce que le micro-ordinateur (13) est agencé de manière à sélectionner, dans le cas d'une sélection, réalisée pendant l'opération de transfert d'enregistrement, de l'une des douilles de raccordement non sélectionnées en tant qu'entrée du signal vidéo pour l'opération de transfert d'enregistrement, la douille de raccordement, sélectionnée pour l'opération de transfert d'enregistrement, en tant qu'entrée pour le signal vidéo, indépendamment de la douille de raccordement sélectionnée.

3. Dispositif selon la revendication 1, caractérisé en ce que le micro-ordinateur (13) est agencé de manière à ignorer la sélection lors d'une sélection, réalisée pendant l'opération de transfert d'enregistrement, de l'une des douilles de raccordement non sélectionnées en tant qu'entrée pour le signal vidéo pour l'opération de transfert d'enregistrement.

4. Dispositif selon l'une ou plusieurs des revendications 1 à 3, caractérisé en ce que le micro-ordinateur (13) est agencé de manière à activer, lors d'une sélection, réalisée pendant l'opération de transfert d'enregistrement, de l'une des douilles de raccordement non sélectionnées en tant qu'entrée pour le signal vidéo pour l'opération de transfert d'enregistrement, l'affichage d'un signal d'avertissement sur l'écran (10) du récepteur de télévision (FS), par l'intermédiaire d'un module de transmission de texte (11).

5. Dispositif selon une ou plusieurs des revendications 1-4, caractérisé en ce que le signal vidéo délivré par la douille de raccordement sélectionnée en tant qu'entrée pour le signal vidéo pour l'opération de transfert d'enregistrement, peut être représenté sur l'écran (10).

6. Dispositif selon une ou plusieurs des revendications 1-5, caractérisé en ce que le micro-ordinateur (13) est agencé de manière à activer l'affichage alphanumérique d'un signal caractéristique pour l'opération de transfert d'enregistrement sur l'écran (10), après le déclenchement de cette opération de transfert d'enregistrement.
